# EUROPEAN PATENT SPECIFICATION

(11) **EP 4 230 889 B1**
(45) Date of publication and mention of the grant of the patent: **03.12.2025**
(21) Application number: 21879581.3
(22) Date of filing: 11.10.2021
(51) Int. Cl.: F16D 3/70, F16D 3/72

(54) **ELASTIC COUPLING**
ELASTISCHE KUPPLUNG
COUPLAGE ÉLASTIQUE

(30) Priority: 14.10.2020 ES 202031036
(43) Date of publication of application: 23.08.2023
(73) Proprietor: TEJASA-TC, S.L.L., 39610 El Astillero (ES)
(72) Inventor: SOLÓRZANO TERÁN, Adrián, 39610 EL ASTILLERO (ES); MARTÍN HERNÁNDEZ, Juan José, 39610 EL ASTILLERO (ES)
(74) Representative: García Gómez, José Donato
(86) International application number: PCT/ES2021/070742
(87) International publication number: WO 2022/079334

(56) References cited:
- EP-A2- 2 626 580
- WO-A1-99/47827
- US-A- 5 364 309
- US-A1- 2017 298 994
- US-A1- 2018 180 104

## Description

### Technical Field

The present invention relates to an elastic coupling applicable in mechanical transmissions for the connection of two shafts and the transmission of a torque from one shaft to the other.

### State of the Art

Different types of elastic couplings are currently known, are used to connect two shafts, transmit the torque from one shaft to another and provide the joint with an elasticity capable of absorbing slight deformations.

These couplings have different structures and configurations depending on the type and degree of deformation to be absorbed, which requires that the coupling has a certain stiffness for each type of deformation: axial, radial, conical and torsional.

Elastic joints comprising two concentrically arranged cylindrical metal reinforcements and a mass of elastomeric material, usually rubber, compressed between the two reinforcements, are known in the state of the art.

The problem with these elastic joints that comprise a mass of elastomeric material is that they do not withstand the high temperatures that are generated in the operation of certain machines or transport elements, or to which such machines can be subjected when working in hot areas, such as foundries or furnace areas. For example, rubber withstands a maximum of 80°C. Another drawback is that rubber deteriorates when in contact with acids or chemicals in general and cannot be used to withstand high loads.

To solve the above problems there are certain metal joints on the market, such as that described in patent US 2,658,710 wherein a cylinder-shaped shock absorber with a central drill is placed on the shaft or support.

The problem with these joints is that they are suitable for absorbing stress only in the axial direction and do not provide suitable damping against radial, oblique or torsional loads.

European patent EP2077402 (HUTCHINSON, S.A.) describes a damper for an aerospace structure made up of an annular chamber with compartments, each of these compartments being filled by a wire mesh metal cushion, completing the device with a damping fluid filling the annular chamber and the interstices between the wire mesh. This elastic joint is complex to manufacture due to the incorporation of the damping fluid and the need to incorporate radial shaft seals or hydraulic seals to prevent fluid leakage over time.

In addition, this joint has only axial elasticity, and does not provide suitable angular, torsional, or radial elasticity. In this state of the art document, the stiffness is provided by the cushion while damping is provided by fluid.

US 2 729 442 discloses a joint with deformable cushions to be arranged between rotatory elements, formed by an outer sleeve and a square-shaped inner sleeve, between which deformable cushions are arranged.

The invention patent ES 2 686 395 B2, of the same holder as that of the present invention, describes an elastic joint; comprising: - an inner ring for being mounted on an shaft, - an outer ring concentric with the inner ring for being mounted on a support and - metal wire cushions arranged between: intermediate segments of the inner ring, of decreasing section towards the opposite ends of said inner ring, and two intermediate portions of the outer ring, of decreasing section towards the opposite ends of said outer ring, and facing the intermediate segments of the inner ring. Further prior art examples in this technical field are patent documents WO 99/47827 and US5364309.

### Summary of the invention

The elastic coupling object of the invention has technical characteristics that provide a series of advantages among which it is worth mentioning: the use only of metal materials, a structure that is very easy to assemble, the incorporation of the metal cushions providing elasticity to the coupling in bearings that perform a stable fastening of said metal cushions; which allows a lighter construction with higher tolerances and, therefore, more economically and which presents an arrangement of the metal cushions that, simultaneously, provides the elastic coupling with the four possible stiffnesses: axial, radial, conical and torsional.

According to the invention, this elastic coupling comprises:
- two substantially parallel sleeves having: an outer face provided with means for fixing the respective shafts to be coupled; a series of facing holes, distributed circularly, and an inner face, facing the opposite sleeve, and provided with cylindrical recesses aligned with the respective holes;
- a metal body arranged between the sleeves, substantially parallel to said sleeves and having two opposite faces, comprising on each of said faces a series of bolts aligned with the recesses and holes of the respective sleeves; and
- metal bearings mounted on the bolts of the body and housed in the respective recesses of the sleeves.

Said bearings comprise an annular metal part provided with an outer surface that contacts the inner surface of the corresponding recess of one of the sleeves with the following being mounted on said annular part: an inner metal wire cushion that forms a contact surface of the bearing with the corresponding bolt, and lateral metal wire cushions that protrude from the opposite ends of the metal part and form the contact surfaces of said metal bearing with the facing faces of the body and of the corresponding sleeve; so that the set of metal bearings provide the elastic coupling with torsional, radial, axial and conical stiffnesses.

The assembly of the different parts of the elastic coupling, that is, of the bearings in the recesses of the sleeves and of the bolts inside the metal bearings and the holes of the sleeves, is carried out in the axial direction, as is the coupling of the shafts to be coupled with the lateral sleeves, which have respective hubs for receiving the end of the corresponding shaft.

In a preferred embodiment, the inner cushion of each of the metal bearings comprises several annular sectors, distributed circumferentially, and slightly spaced apart from each other in the tangential direction.

According to the invention, the annular part of the bearings has internally "L"-shaped section perimeter appendages, which have, in the radial direction, a length smaller than the section of the inner cushion, so that the forming annular sectors of said inner cushion protrude from perimeter appendages towards the inside of the bearings.

Said perimeter appendages define in the metal bearings: an annular recess opened towards the inside of the bearing, in which a peripheral portion of the inner cushion is housed, which is compressed against the inner surface of the annular part of the corresponding bearing; and two annular recesses, opened towards opposite sides of the bearing, in which end portions of the corresponding lateral cushions are housed.

According to the described characteristics, this elastic coupling provides a series of additional advantages to those mentioned above; namely: it absorbs and damps the irregularities of the torque transmitted from one shaft to another, it displaces the critical regimes, it accepts misalignments and differences between the shafts, it suppresses the possible stresses of a stiff coupling under the same conditions, it allows a lighter construction, with higher tolerances and, therefore, more economically; it does not include combustible materials and it withstands high temperatures.

Another remarkable feature of this coupling is that it does not have play when in contact by means of the wire cushions, so it is silent, frictionless and does not need lubrication.

### Brief description of the contents of the drawings

In order to complement the description that is being carried out and with the purpose of facilitating the understanding of the characteristics of the invention, the present description is accompanied by a set of drawings wherein, by way of a non-limiting example, the following has been represented:
- Figure 1 shows a perspective view of one exemplary embodiment of the elastic coupling of the invention.
- Figure 2 shows an elevational view of the elastic coupling of Figure 1.
- Figure 3 shows an exploded perspective view of the elastic coupling.
- Figure 4 shows an elevational view of the elastic coupling sectioned along a mid-vertical plane.
- Figure 5 corresponds to the enlarged detail "A" of Figure 4.
- Figures 6 and 7 show respective perspective and elevational views of one of the metal bearings of the elastic coupling.
- Figure 8 shows a plan view of a metal bearing sectioned along the horizontal plane B-B' referenced in Figure 7.
- Figure 9 shows an elevational view of the metal bearing sectioned along the vertical plane C-C' referenced in Figure 7.

### Detailed explanation of embodiments of the invention

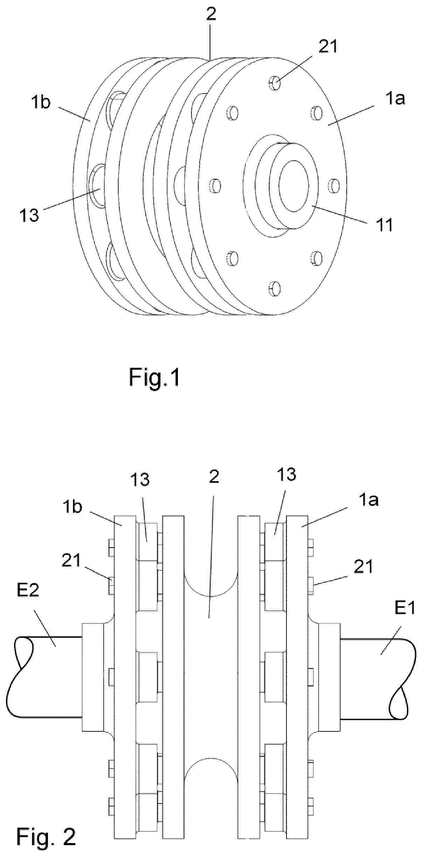

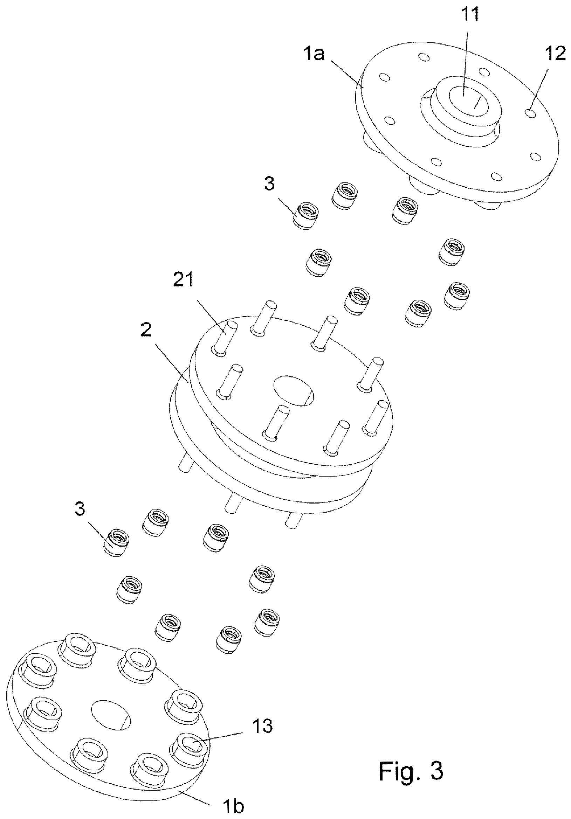

The elastic coupling shown in Figures 1 to 4 comprises: two equal sleeves (1a, 1b), symmetrically arranged in parallel planes; a metal body (2) arranged between said sleeves; and metal bearings (3) arranged between said body (2) and the sleeves (1a, 1b).

The sleeves (1a, 1b) are metallic and have on their external face a hub (11) forming means for fixing them to the shafts (E1, E2) to be coupled, as shown in Figure 2.

Each of the sleeves (1a, 1b) has a number of holes (12) distributed circularly and facing the opposite sleeve (1b, 1a) and, on its inner face, cylindrical recesses (13), concentric with said holes (12) and intended to receive inside the respective metal bearings (3).

In turn, the body (2) comprises on its opposite faces a number of bolts (21) aligned with the respective recesses (13) and holes (12) of the sleeves (1a, 1b).

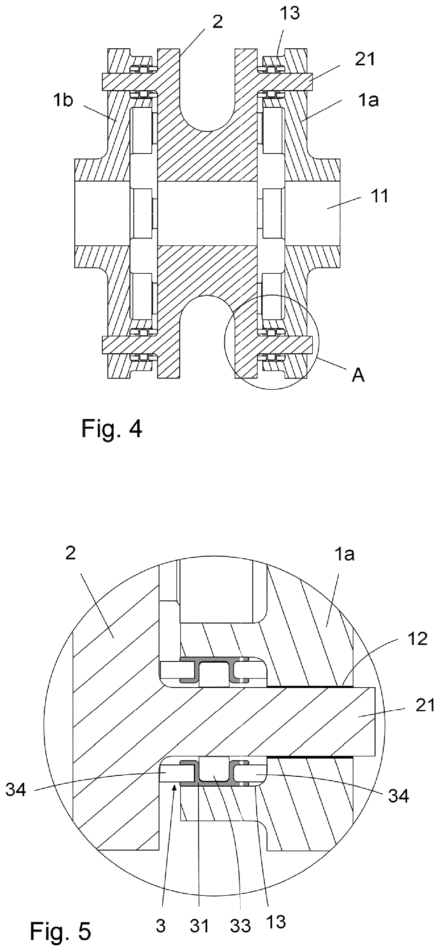

As can be seen in Figures 4 and 5, the metal bearings (3) are mounted on the bolts (21) of the body (2) and housed in the respective recesses (13) of the sleeves (1a, 1b).

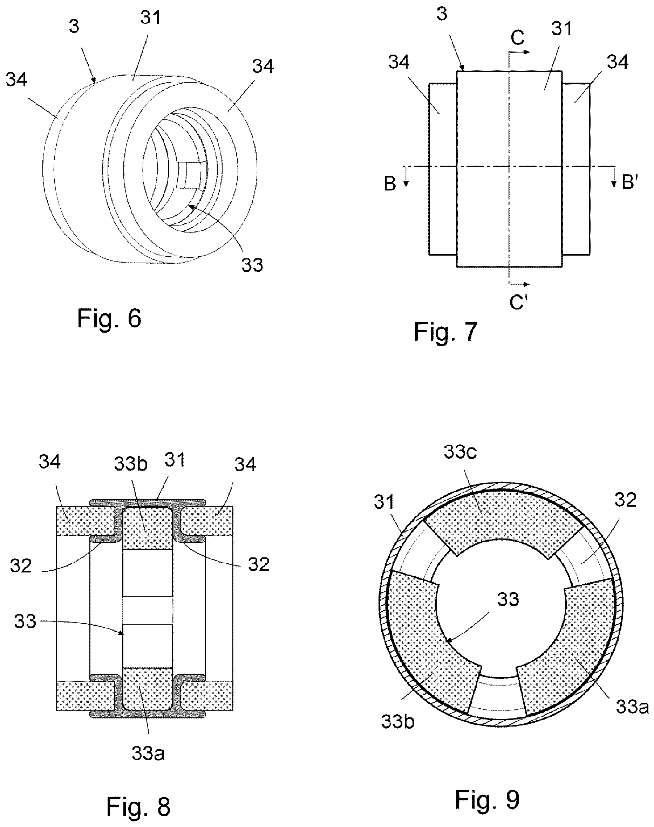

As can be seen in Figures 6 to 9, the metal bearings (3) comprise an annular part (31), substantially cylindrical and preferably made of steel, which has, on its inner surface, "L"-shaped section perimeter appendages (32).

Said appendages (32) define an annular cavity, open towards the inside of the metal bearings (3) in which a peripheral portion of an inner metal wire cushion (33) is housed, formed in this case by several annular sectors (33a, 33b, 33c) distributed circumferentially, slightly spaced apart from each other and protruding from the appendages (32) towards the inside of the metal bearing.

Said appendages (32) also define in the metal bearings (3) two annular recesses, opened towards opposite sides of the metal bearing, and in which end portions of respective lateral metal wire cushions (34) are housed.

As can be seen in the section in Figure 4 and in the enlarged detail in Figure 5, in the mounting position of the elastic coupling, the metal bearings (3) are mounted on the bolts (21) of the body (2) and housed in the recesses (13) of the corresponding sleeve (1a, 1b).

In this assembly position, the metal bearings (3) contact: with the outer surface of the annular part (31) against the inner surface of the corresponding recess (13); with the annular sectors (33a, 33b, 33c) forming the inner cushion (33) against the corresponding bolt (21), and with the opposite ends of the lateral cushions (34) against the facing faces of the body (2) and of the corresponding sleeve (1a, 1b).

In this way the body (2) and the sleeves (1a, 1b) are kept separated by the inner cushion (33) and by the lateral cushions (34) of the metal bearings (3) which provides the elastic coupling with axial, radial, torsional and conical stiffnesses.

Once the nature of the invention as well as an example of preferred embodiment have been sufficiently described, it is stated for all pertinent purposes that the equipment, form, size and arrangement of the elements described are susceptible to changes, provided these do not involve an alteration of the essential features of the invention which are claimed below.

## Claims

1. Elastic coupling, suitable for the coupling of two shafts (E1, E2) and the transmission of a torque from one shaft to another; wherein it comprises:
- two substantially parallel metallic sleeves (1a, 1b) comprising: an outer face provided with fixing means of the respective shafts (E1 , E2) to be coupled; a number of facing holes (12), and an inner face, facing the opposite sleeve, and provided with cylindrical recesses (13) aligned with the respective holes (12);
- a metal body (2) arranged between the sleeves (1a, 1b), substantially parallel to said sleeves, and comprising, on two opposite faces, a number of bolts (21), aligned with the respective recesses (13), and holes (12) of said sleeves (1a, 1b) and;
- metal bearings (3) mounted on the bolts (21) of the body (2) and housed in the respective recesses (13) of the sleeves (1a, 1b); **characterised in that** said metal bearings (3) comprising an annular metal part (31) contacting with an outer surface against the inner surface of the corresponding recess (13) of one of the sleeves (1a, 1b) with the following being mounted on said annular part (31): an inner metal wire cushion (33) forming a contact surface of the metal bearing (3) with the corresponding bolt (21) of the body (2), and lateral metal wire cushions (34) protruding from the opposite ends of the annular part (31) and forming the contact surfaces of said metal bearing (3) with the facing faces of the body (2) and of the corresponding sleeve (1a, 1b); so that the metal bearings (3) provide the elastic coupling with torsional, radial, axial and conical stiffnesses.

2. The coupling, according to claim 1, **characterised in that** the inner cushion (33) comprises several annular sectors (33a, 33b, 33c), distributed circumferentially and slightly spaced apart from each other in the tangential direction.

3. The coupling, according to any one of the preceding claims, **characterised in that** the annular part (31a) of the metal bearings (3) internally comprises "L"-shaped section perimeter appendages (32), which have, in radial direction, a length smaller than the section of the inner cushion (33) and which define: an annular recess opened towards the inside of the bearing, in which a peripheral portion of the inner cushion (33) is housed; and two annular recesses, opened towards opposite sides of the metal bearing (3), in which end portions of the corresponding lateral cushions (34) are housed.

## Patentansprüche

1. Elastische Kupplung, geeignet für die Kupplung von zwei Wellen (E1, E2) und die Übertragung eines Drehmoments von einer Welle auf eine andere; wobei sie Folgendes umfasst:
- zwei im Wesentlichen parallele Metallhülsen (1a, 1b), umfassend: eine Außenfläche, die mit Befestigungsmitteln der jeweiligen zu koppelnden Welle (E1, E2) versehen ist; eine Anzahl von einander zugewandten Öffnungen (12) und eine Innenfläche, die der gegenüberliegenden Hülse zugewandt ist und mit zylindrischen Aussparungen (13) versehen ist, die mit den jeweiligen Öffnungen (12) ausgerichtet sind;
- einen Metallkörper (2), der zwischen den Hülsen (1a, 1b) im Wesentlichen parallel zu den Hülsen angeordnet ist und an zwei gegenüberliegenden Flächen eine Anzahl von Bolzen (21), die mit den jeweiligen Aussparungen (13) ausgerichtet sind, und Öffnungen (12) der Hülsen (1a, 1b) umfasst;
- Metalllager (3), die auf den Bolzen (21) des Körpers (2) montiert sind und in den jeweiligen Aussparungen (13) der Hülsen (1a, 1b) untergebracht sind; **dadurch gekennzeichnet, dass** die Metalllager (3) ein ringförmiges Metallteil (31) umfassen, das mit einer Außenfläche an der Innenfläche der entsprechenden Aussparung (13) einer der Hülsen (1a, 1b) anliegt, wobei das Folgende auf dem ringförmigen Teil (31) montiert ist: ein inneres Metall-Drahtkissen (33), das eine Kontaktfläche des Metalllagers (3) mit dem entsprechenden Bolzen (21) des Körpers (2) bildet, und seitliche Metall-Drahtkissen (34), die von den entgegengesetzten Enden des ringförmigen Teils (31) vorstehen und die Kontaktflächen des Metalllagers (3) mit den gegenüberliegenden Flächen des Körpers (2) und der entsprechenden Hülse (1a, 1b) bilden; sodass die Metalllager (3) die elastische Kupplung mit Verdreh-, Radial-, Axial- und konischen Steifigkeiten versehen.

2. Kupplung nach Anspruch 1, **dadurch gekennzeichnet, dass** das Innenkissen (33) mehrere ringförmige Bereiche (33a, 33b, 33c) umfasst, die umlaufend verteilt und geringfügig voneinander in tangentialer Richtung beabstandet sind.

3. Kupplung nach einem der vorhergehenden Ansprüche, **dadurch gekennzeichnet, dass** der ringförmige Teil (31a) der Metalllager (3) innen "L"-förmige Abschnittsumfangsfortsätze (32) aufweist, die in radialer Richtung eine Länge aufweisen, die kleiner als der Abschnitt des inneren Kissens (33) ist, und die Folgendes definieren: eine ringförmige Aussparung, die zum Inneren des Lagers hin geöffnet ist, in der ein Umfangsabschnitt des inneren Kissens (33) untergebracht ist; und zwei ringförmige Aussparungen, die zu gegenüberliegenden Seiten des Metalllagers (3) hin geöffnet sind, in denen Endabschnitte der entsprechenden seitlichen Kissen (34) untergebracht sind.

## Revendications

1. Accouplement élastique, adapté pour l'accouplement de deux arbres (E1, E2) et la transmission d'un couple d'un arbre à l'autre ; **caractérisé en ce qu'**il comprend :
- deux manchons métalliques sensiblement parallèles (1a, 1b) comprenant : une face extérieure pourvue de moyens de fixation des arbres respectifs (E1, E2) à accoupler ; un certain nombre d'orifices opposés (12), et une face intérieure, tournée vers le manchon opposé, et pourvue d'évidements cylindriques (13) alignés avec les orifices respectifs (12) ;
- un corps métallique (2) disposé entre les manchons (1a, 1b), sensiblement parallèle à ces manchons, et comprenant, sur deux faces opposées, un certain nombre de boulons (21), alignés avec les évidements respectifs (13), et les orifices (12) desdits manchons (1a, 1b) et ;
- des paliers métalliques (3) montés sur les boulons (21) du corps (2) et logés dans les évidements respectifs (13) des manchons (1a, 1b) ; **caractérisé en ce que** lesdits paliers métalliques (3) comprennent une partie métallique annulaire (31) en contact avec une surface extérieure contre la surface intérieure de l'évidement correspondant (13) de l'un des manchons (1a, 1b), les éléments suivants étant montés sur ladite partie annulaire (31) : un coussin intérieur (33) en fil métallique formant une surface de contact du palier métallique (3) avec le boulon correspondant (21) du corps (2), et des coussins latéraux (34) en fil métallique faisant saillie aux extrémités opposées de la partie annulaire (31) et formant les surfaces de contact dudit palier métallique (3) avec les faces opposées du corps (2) et du manchon correspondant (1a, 1b) ; de sorte que les paliers métalliques (3) assurent à l'accouplement élastique des rigidités en torsion, radiale, axiale et conique.

2. Accouplement, selon la revendication 1, **caractérisé en ce que** le coussin intérieur (33) comprend plusieurs secteurs annulaires (33a, 33b, 33c), répartis circonférentiellement et légèrement espacés les uns des autres dans la direction tangentielle.

3. Accouplement selon l'une quelconque des revendications précédentes, **caractérisé en ce que** la partie annulaire (31a) des paliers métalliques (3) comprend intérieurement des appendices périmétriques (32) en section en forme de « L », qui présentent, dans la direction radiale, une longueur inférieure à la section du coussin intérieur (33) et définissent : un évidement annulaire ouvert vers l'intérieur du palier, dans lequel est logée une partie périphérique du coussin intérieur (33) ; et deux évidements annulaires, ouverts vers des côtés opposés du palier métallique (3), dans lesquels sont logées des parties d'extrémité des coussins latéraux (34) correspondants.
